# EUROPEAN PATENT APPLICATION

(11) **EP 3 276 188 A1**
(43) Date of publication of application: **31.01.2018**
(21) Application number: 16207167.4
(22) Date of filing: 28.12.2016
(51) Int. Cl.: F16B 25/00

(54) **SCREW**

(30) Priority: 28.07.2016 ES 201630977
(71) Applicant: Saint-Gobain Placo, 92150 Suresnes (FR); Saint-Gobain Placo Ibérica, S.A., 28002, Madrid (ES)
(72) Inventor: LOMBARD, Pierre, 75014 Paris (FR); MELICE, Daniel, 93200 Saint-Denis (FR); RICHARDSON, Adam, Coventry, CV3 2TT (GB); JONES, Nick, Coventry, CV3 2TT (GB); GONZALES LOPEZ, Carlos, 26121 Viguera (La Rioja) (ES); DIAZ LOPEZ, Alfredo, 28034 Madrid (ES); GOMEZ GARCIA, Valentin, 26120 La Rioja (ES)
(74) Representative: Saint-Gobain Recherche

(57) **Abstract**

This screw (20) comprises a shank (1) provided with a thread (13), that ends in a final attack portion (2) and on the opposite end of which there is a head (3), including flaps (4) that protrude diametrically. The screw (20) has at least one pair of flaps (4) located along a portion of the shank (1), without these flaps (4) being present on the area corresponding to the final attack end (2).

## Description

### SUBJECT OF THE INVENTION

The aim of the present application is to register a screw for fastening plate-type materials or sheets of wood, plaster, etc. to a base material such as a metal or wood profile, etc., into which the subject of the present invention will be threaded.

More specifically, the invention proposes the development of a screw, in order to fasten plate- or sheet-type surfaces, provided with flaps that protrude from the shank of the screw, to create an over-diameter in the material to be fastened, without damaging the flaps once the screw is threaded into the base material or profile. This ensures the correct positioning of the screw head in the material to be attached, without damaging the fastened material.

### BACKGROUND OF THE INVENTION

There is a wide variety of screws on the market that differ due to different aspects, such as the diameter of the thread, the material, the attack end of the shank, the shape of the screw head, etc.

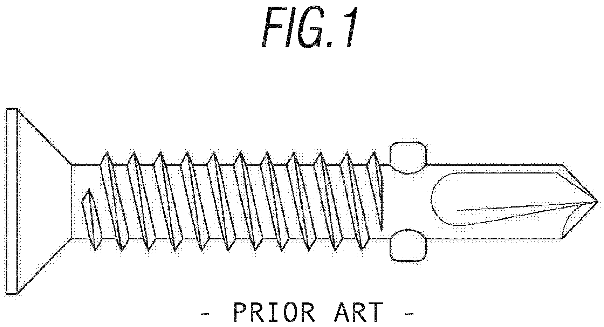

In addition to these differentiating aspects, there are some screws on the market that have projections or flaps (see figure 1) on the area of the tip which allow an over-diameter to be created in the material to be fastened, preventing the material from lifting up. A problem of "lifting" or "jacking" may occur when a screw is used to fasten a material to a substrate, due to the fact that when the screw is rotated, the material rises up towards the screw head faster than the tip of the screw moves into the substrate. Thanks to the presence of projections or flaps on the area of the tip, the screw is not threaded into the material that will be attached.

However, it has been observed that when the flaps come into contact with a metal profile, they break and the screw threads on said profile. In certain applications, when these flaps come into contact with the metal profile, which has a small thickness, the profile into which the screw is to be threaded is damaged, thus weakening the base material and making it easy for the screw to be cross-threaded during the process of being screwed into the metal. In addition, the screw cannot be reused nor easily removed, since the flaps break once they come into contact with the base material.

### DESCRIPTION OF THE INVENTION

The present invention has been developed with the aim of providing a screw that constitutes a novelty within the field of application, and solves the disadvantages mentioned above while also contributing other additional advantages, which will become evident from the description provided below.

Therefore, one subject of the present invention is to provide a screw for fixing a plate to a base, said screw comprising a shank provided with a thread, that ends in a final attack portion (which may or may not have, for example, a pointed shape) and which has a head on the opposite end, including flaps of any geometric shape that protrude diametrically, characterized in that it has at least one pair of flaps that are located along the screw shaft, without these flaps being present on the area corresponding to the final attack end.

Given these characteristics, the following advantages are obtained:
- It creates an over-diameter in the plate to be attached, which makes it possible to enter the screw head in the plate, with the screw head possibly being completely hidden, and facilitates this process of concealing and setting the screw in the material to be fastened, ensuring good cooperation between the screw head and the material to be fastened. According to the invention, an over-diameter is a portion of the hole initially created by the attack portion of the screw shank, which is increased in diameter by the flaps located between the attack portion of the screw shank and the screw head;
- Concealment of the screw due to the over-diameter prevents cracking or damage to the surface of the material to be fastened. For example, it prevents damage to a plaster plate where the screw is inserted;
- The position of the flaps on the shank prevents them from coming into contact with the profile or base material where the screw is threaded, thus preventing breakage of the flaps. In addition, damage to the profile or base material is prevented;
- It facilitates the reuse of the screw since the flaps are not damaged, unlike the screw of the prior art shown in figure 1, for which reason the operator or user can remove the screw and thread it again if necessary;
- It prevents having to drill the entire material to be fastened with the screw, since, as the flaps are located in an area far from the tip, it does not create an over-diameter in all of the material to be drilled, which thus prevents the movement of the piece to be fastened, unlike the case in which an over-diameter is made throughout the entire hole of the material to be attached.

Preferably, the two flaps are located in diametrically opposed positions. This ensures stability when screwing the screw in the element to be fastened.

In a preferred embodiment, the two flaps are located on a point close to the screw head. In this way, an over-diameter is created only in a limited part of the element to be fastened.

In embodiments of the invention, the flaps can be located on a smooth area of the screw or on a threaded area of the screw.

In one embodiment, the flaps are axially aligned with respect to the longitudinal axis of the shank.

In another embodiment, the longitudinal axis of at least one of the flaps can have an angle of inclination with respect to the longitudinal axis of the shank. More specifically, the mean plane of at least one of the flaps can be inclined, relative to the longitudinal axis of the shank, so that the end of the flap furthest from the head is circumferentially in front of the rest of the flap in the screwing direction of the screw. Such inclined flaps make it possible to obtain a more effective drilling effect when screwing the screw in the element to be fastened.

According to one aspect of the invention, the diameter defined by the points of the flaps that protrude the most is equal to or less than the diameter of the screw head. In a preferred embodiment, the diameter defined by the points of the flaps that protrude the most is equal to the diameter of the screw head, so that the screw head can be completely housed inside the material of the element to be fastened in the fixed configuration.

In one embodiment, the screw head has a generally frusto-conical portion which flares from the screw shank, and the diameter defined by the points of the flaps that protrude the most is equal to or less than the maximum diameter of the frusto-conical portion of the screw head, preferably equal to the maximum diameter of the frusto-conical portion of the screw head.

According to one aspect of the invention, the diameter defined by the points of the flaps that protrude the most is strictly greater than the diameter of the thread of the screw shank. This arrangement, combined with the fact that the flaps are located far from the tip of the screw, makes it possible to create an over-diameter only in a region of the plate close to the screw head whereas at the other end, near the tip of the screw, the thread of the screw cooperates with the material of the plate, thus preventing movement of the plate relative to the base.

According to another aspect of the invention, the head of the screw is configured to be completely concealed in the material of the plate in the configuration where the plate is fixed to the base. In one embodiment, the head of the screw has a flat end portion which is configured to be set back from, or flush with, a main surface of the plate in the configuration where the plate is fixed to the base. In this way, there is no protruding element at the surface of the plate in the fixed configuration, which is advantageous for the visual aspect of the plate which may be part of a wall. More specifically, due to the screw heads lying flat with the surface of the plates forming the wall, in installations where the wall is not finished the result looks neater, whereas in installations where jointing and finishing coats are applied, jointing and finishing can be done more efficiently and more qualitatively.

In one embodiment, the flat portion of the head has, on its periphery, cutting means directed towards the shank of the screw. Such cutting means make it possible to obtain a clean cut at the surface of the plate to be fixed, which is formed by a paper sheet in the case of a plasterboard.

According to an advantageous feature, the longitudinal dimension of each flap, parallel to the longitudinal axis of the shank, is greater than or equal to the pitch of the thread, preferably of the order of twice the pitch of the thread. Thus, the over-diameter can be created efficiently through rotating movement of the flaps in the material of the plate induced by screwing the screw into the material of the plate.

In one embodiment, at least one flap has a curved shape with respect to the mean plane of the flap, so as to form a concavity directed towards the forward in the screwing direction of the screw. Such a concavity makes it possible to move and evacuate more easily the material removed from the plate when creating the over-diameter, in a way similar to a shovel or a wood drill. In one embodiment, the end of at least one flap furthest from the screw head has a beveled edge.

The location of the flaps close to the screw head and the adjusted diameter of the flaps, combined with the inclination and/or the concavity and/or the beveled edge of the flaps, result in an effective displacement and evacuation of the material of the plate below the screw head. Thus, it is possible to avoid defects at the surface of the plate, such as defects due to screw head proudness when the screw head projects from the surface of the plate, or defects due to bulging of the material of the plate around the screw head.

In an advantageous manner, the screw comprises a thrust device, in particular a radial flange, for pressing the material of the plate removed by the flaps in the direction of advance of the screw, said thrust device being positioned between the screw head and the flaps.

Preferably, the distance between the end of the head opposite from the shank and the end of the flaps furthest from the head is less than or equal to the thickness of the portion of the plate intended to be fixed on the base by means of the screw. Thus, the flaps of the screw are housed in the plate in the fixed configuration and do not come into contact with the base material. In this way, breakage of the flaps is prevented and the screw can be reused if necessary, since the flaps are not damaged. In addition, damage to the base material is prevented.

In one embodiment, on the opposite side from the head, the end of the screw shank has a pointed shape. In another embodiment, on the opposite side from the head, the end of the screw shank has a drill-like shape.

Another subject of the invention is the use of a screw as described above for fixing a plaster-based plate on a base, such as a profile made of metal or wood.

Another subject of the invention is a method for fixing a plate to a base by means of a screw as described above, comprising screwing the screw in the material of the plate and the material of the base until the head of the screw is concealed in the material of the plate.

Other characteristics and advantages of a screw according to the present invention will become clear in light of the description of several embodiments, which, given solely by way of example, are illustrated in the accompanying drawings, wherein:

### BRIEF DESCRIPTION OF THE DRAWINGS

Figure 1 is an elevation view of a screw of the prior art;
Figures 2a and 2b are elevation views of a first embodiment of the screw according to the invention;
Figures 3a and 3b are elevation views of a second embodiment of the screw of the invention;
Figure 4 is an elevation view of a third embodiment of the screw of the invention;
Figure 5 is a perspective view of a fourth embodiment of the screw of the invention;
Figure 6 is an elevation view of the screw of Figure 5 in a fixed configuration of a plaster-based plate to a base profile by means of the screw;
Figure 7 is a view at a larger scale of the part of the screw of Figures 5 and 6 close to the screw head;
Figure 8 is a top view of the screw head of Figures 5 to 7;
Figure 9 is a perspective view of a fifth embodiment of the screw of the invention;
Figure 10 is an elevation view of the screw of Figure 9 in a fixed configuration of a plaster-based plate to a base profile by means of the screw;
Figure 11 is a view at a larger scale of the part of the screw of Figures 9 and 10 close to the screw head;
Figure 12 is a perspective view of a sixth embodiment of the screw of the invention;
Figure 13 is an elevation view of the screw of Figure 12 in a fixed configuration of a plaster-based plate to a base profile by means of the screw;
Figure 14 is a view at a larger scale of the part of the screw of Figures 12 and 13 close to the screw head;
Figure 15 is an elevation view for a screw according to a variant of the first embodiment; and
Figure 16 is an elevation view of an alternative embodiment of the end of the screw of the invention.

### DESCRIPTION OF PREFERRED EMBODIMENTS

In view of the aforementioned figures and in accordance with the numbering adopted, examples of preferred embodiments of the invention can be observed therein, which comprise the parts and elements indicated and described in detail below.

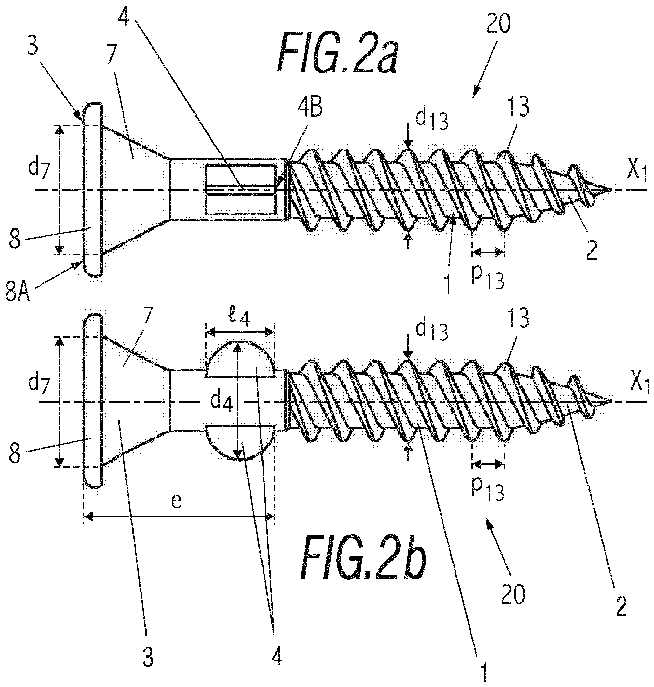

According to the first embodiment of the screw of the invention shown in Figures 2a and 2b, the screw 20 comprises a shank 1 provided with a thread 13 that ends in a final attack portion with a pointed shape 2 and on the opposite end it has a countersunk head 3, with a pair of flaps 4 next to the head, which are located along a portion of the shank without threading and are located in diametrically opposed positions. The screw 20 is designed to fix a plate to a base material, in particular a plaster-based plate to a metal or wood profile.

The head 3 of the screw includes a generally frusto-conical portion 7 which flares from the shank 1, and a flat portion 8 which forms the end of the head 3 opposite from the shank 1. In a classical manner, the head 3 is provided with a recess 5 for receiving a screwing tool on its face oriented away from the shank 1.

In the first embodiment shown in figures 2a and 2b, the flaps 4 are axially aligned with respect to the longitudinal axis X₁ of the shank 1. As can be seen in the figures, the diameter d₄ defined by the points of the flaps 4 that protrude the most is greater than the diameter d₁₃ of the thread 13 of the screw shank 1. In addition, the diameter d₄ defined by the points of the flaps 4 that protrude the most is equal to the diameter d₇ of the frusto-conical portion 7 of the screw head. In this way, an over-diameter corresponding to the diameter of the portion 7 of the screw head is created in the plate to be fixed, so that the screw head 3 can be completely concealed inside the material of the plate to be fastened in the fixed configuration.

Advantageously, since the flaps 4 are located close to the head 3, the over-diameter is created only in a limited region of the plate to be fixed, which thus prevents the movement of the plate to be fixed. The longitudinal dimension ℓ₄ of each flap 4, parallel to the longitudinal axis X₁ of the shank 1, is of the order of twice the pitch p₁₃ of the thread 13, so that the over-diameter can be created efficiently by screwing the screw in the material of the plate. The distance e between the end 8A of the head 3 opposite from the shank 1 and the end 4B of each flap 4 furthest from the head 3 is preferably less than or equal to the thickness of the portion of the plate to be fixed, so that the flaps 4 are housed in the plate in the fixed configuration and do not come into contact with the base material, thus preventing breakage of the flaps.

Preferably, the head 3 of the screw is configured to be set back from, or flush with, a main surface of the plate in the fixed configuration. Optionally, the flat portion 8 of the head 3 can have a cutting edge on its periphery directed towards the shank 1 of the screw, so as to guarantee a clean cut at the surface of the plate to be fixed, which is a paper sheet in the case of a plaster-based plate.

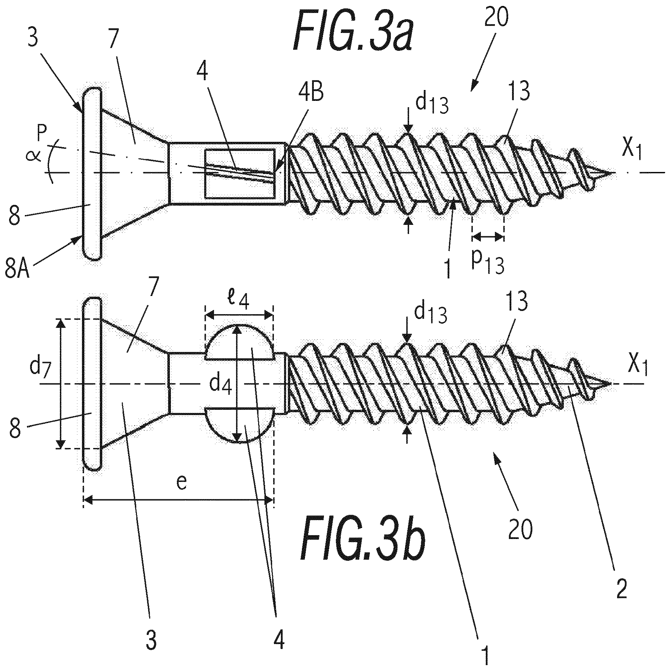

In the second embodiment shown in figures 3a and 3b, those elements which are analogous to those of the first embodiment bear identical reference signs. The screw 20 of the second embodiment differs from the first embodiment in that the longitudinal axis of at least one of the flaps 4 exhibits an angle of inclination α with respect to the longitudinal axis X₁ of the shank 1. More precisely, in the example shown in figures 3a and 3b, the mean plane P of each flap 4 is inclined, relative to the longitudinal axis X₁ of the shank 1, according to the angle α so that the end 4B of each flap 4 furthest from the head 3 is circumferentially in front of the rest of the flap 4 in the screwing direction of the screw. This inclined arrangement of the flaps makes it possible to obtain a more effective drilling effect when screwing the screw 20 in the plate to be fastened.

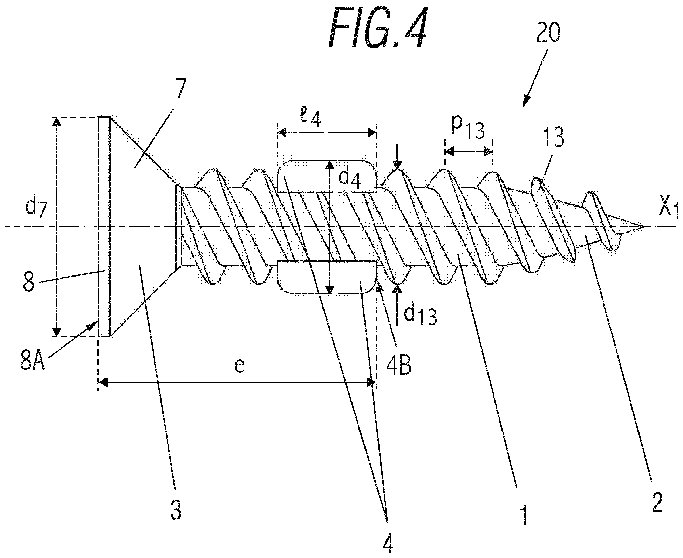

In the third embodiment represented in figure 4, those elements which are analogous to those of the first embodiment bear identical reference signs. The screw 20 of the third embodiment differs from the first embodiment in that the flaps 4 are located between portions provided with threading. In addition, in this third embodiment, the diameter d₄ defined by the points of the flaps 4 that protrude the most is not equal to the diameter d₇ of the frusto-conical portion 7 of the screw head but less than to the diameter d₇, while still being greater than the diameter d₁₃ of the thread 13 of the screw shank 1.

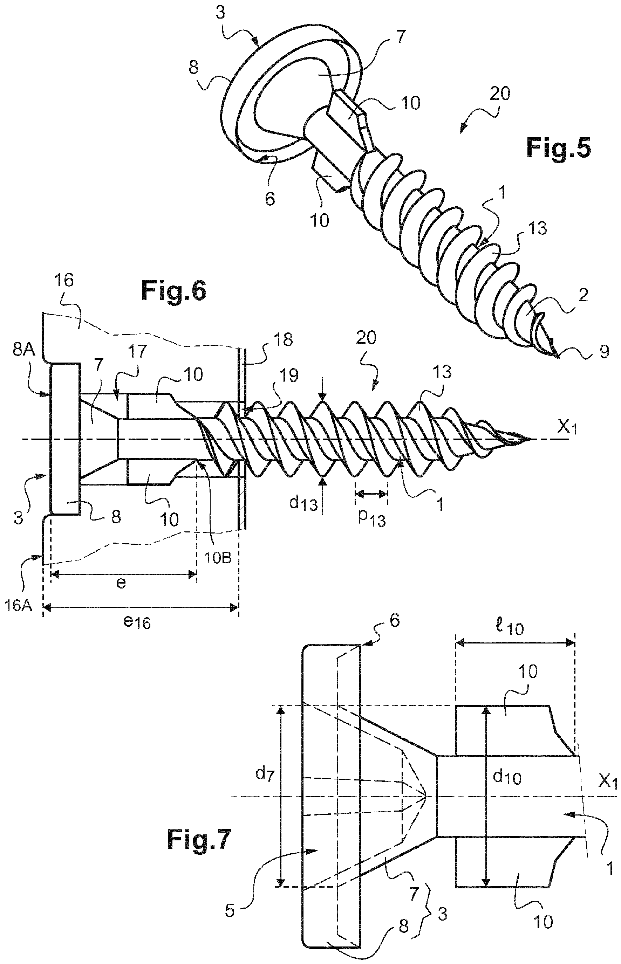

In the fourth embodiment shown in figures 5 to 8, those elements which are analogous to those of the first embodiment bear identical reference signs. Similarly to the first embodiment, the flaps 10 of the screw 20 according to the fourth embodiment are axially aligned with respect to the longitudinal axis X₁ of the shank 1. The flaps 10 differ from the flaps 4 of the first embodiment in that they are designed with an arrow shape at their end 10B furthest from the screw head 3, so as to facilitate there advancing movement in the material of the plate to be fixed when screwing the screw, in particular by means of a screwing tool acting in the recess 5 provided in the screw head 3 on its face oriented away from the shank 1. In addition, the diameter d₁₀ defined by the points of the flaps 10 that protrude the most is greater than the diameter d₁₃ of the thread 13 of the screw shank 1, while being equal to the diameter d₇ of the frusto-conical portion 7 of the screw head 3. Here again, the longitudinal dimension ℓ₁₀ of each flap 10, parallel to the longitudinal axis X₁ of the shank 1, is of the order of twice the pitch p₁₃ of the thread 13.

Figure 6 illustrates a plaster-based plate 16 fixed to a metal profile 18 by means of the screw 20. This figure clearly shows that an over-diameter 17 is created in the plate 16 close to the screw head 3, having the diameter d₁₀ as defined by the flaps 10, which is greater than the diameter d₁₃ of the hole 19 created by the thread 13 in the plate 16 and the metal profile 18. The distance e between the end 8A of the head 3 opposite from the shank 1 and the end 10B of each flap 10 furthest from the head 3 is less than the thickness e₁₆ of the portion of the plate 16, so that the flaps 10 are housed in the plate 16 in the fixed configuration and do not come into contact with the metal profile 18, thus preventing breakage of the flaps and damage to the metal profile. As shown in Figure 6, the head 3 of the screw is configured to be set back from, or flush with, the main surface 16A of the plate 16 in the fixed configuration, and the flat portion 8 of the head has a cutting edge 6 on its periphery directed towards the shank 1 of the screw, so as to guarantee a clean cut in the paper sheet forming the surface of the plate 16.

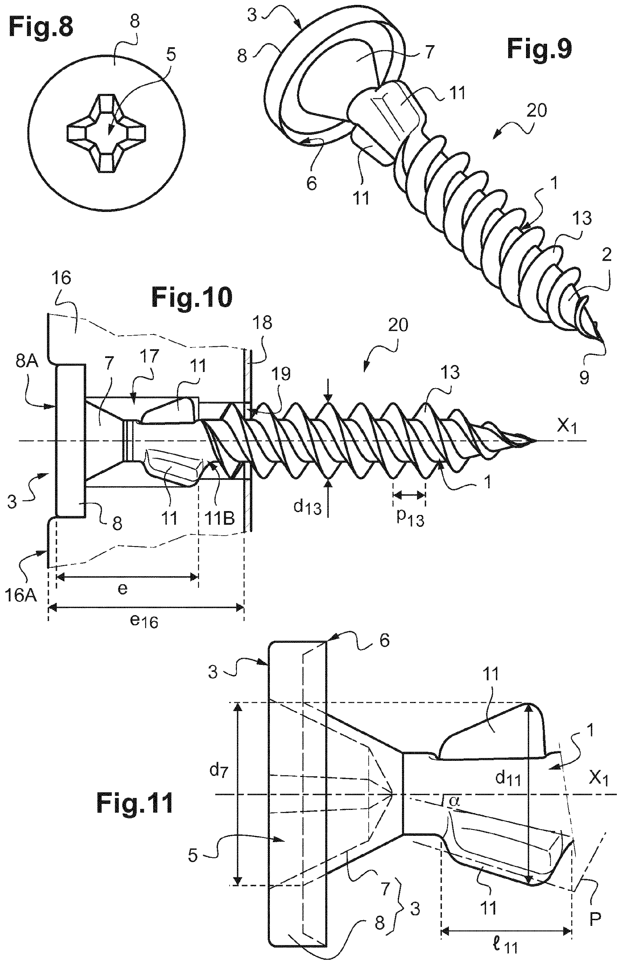

In the fifth embodiment shown in figures 9 to 11, those elements which are analogous to those of the first embodiment bear identical reference signs. Similarly to the second embodiment, the flaps 11 of the screw 20 according to the fifth embodiment are designed with the mean plane P of each flap 11 which is inclined, relative to the longitudinal axis X₁ of the shank 1, according to an angle α so that the end 11B of each flap 11 furthest from the head 3 is circumferentially in front of the rest of the flap 11 in the screwing direction of the screw. Thus, it is possible to obtain a more effective drilling effect when screwing the screw 20 in the plate 16 to be fastened to the profile 18. Here again, the diameter d₁₁ defined by the points of the flaps 11 that protrude the most is greater than the diameter d₁₃ of the thread 13 of the screw shank 1, while being equal to the diameter d₇ of the frusto-conical portion 7 of the screw head 3. In addition, the longitudinal dimension ℓ₁₁ of each flap 11, parallel to the longitudinal axis X₁ of the shank 1, is of the order of twice the pitch p₁₃ of the thread 13.

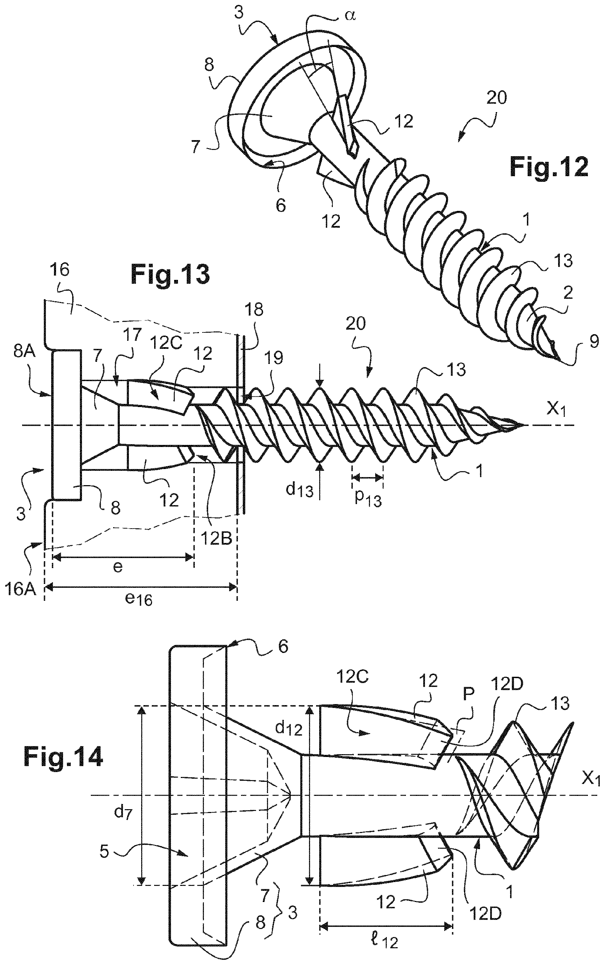

In the sixth embodiment shown in figures 12 to 14, those elements which are analogous to those of the first embodiment bear identical reference signs. In this sixth embodiment, the flaps 12 of the screw 20 are not only designed with the mean plane P of each flap 12 inclined, relative to the longitudinal axis X₁ of the shank 1, according to an angle α so that the end 12B of each flap 12 furthest from the head 3 is circumferentially in front of the rest of the flap 12 in the screwing direction of the screw, but each flap 12 also exhibits a curved shape with respect to the mean plane P of the flap, so as to form a concavity 12C directed towards the forward in the screwing direction of the screw. In addition, the end 12B of each flap 12 furthest from the head 3 includes a beveled edge 12D.

The combination of the inclination, the concavity 12C and the beveled edge 12D of the flaps 12 makes it possible to have an effective drilling effect when screwing the screw 20 in the plate 16 to be fastened to the profile 18 and at the same time move and evacuate more easily the material removed from the plate 16 when creating the over-diameter 17. In accordance with the invention, the diameter d₁₂ defined by the points of the flaps 12 that protrude the most is greater than the diameter d₁₃ of the thread 13 of the screw shank 1, while being equal to the diameter d₇ of the frusto-conical portion 7 of the screw head 3. In addition, the longitudinal dimension ℓ₁₂ of each flap 12, parallel to the longitudinal axis X₁ of the shank 1, is of the order of twice the pitch p₁₃ of the thread 13.

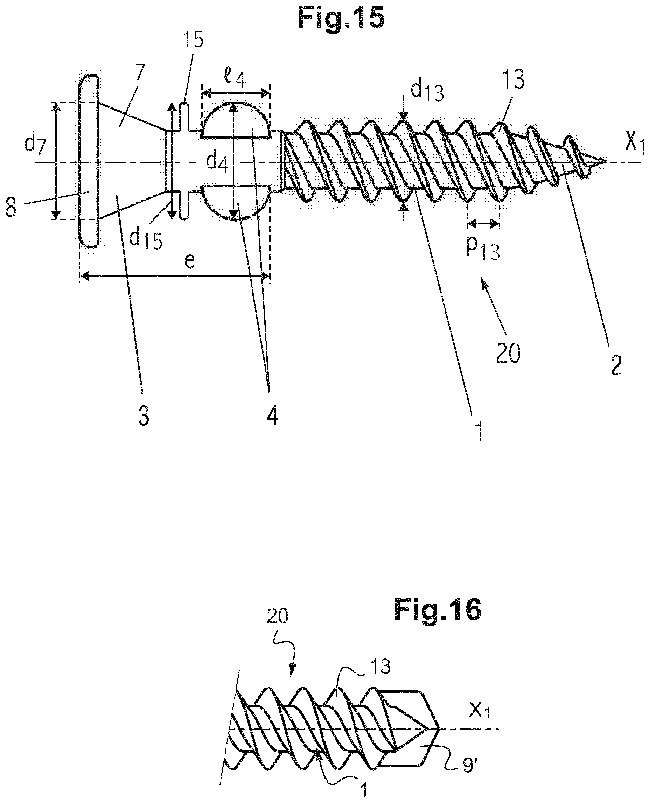

Figure 15 illustrates a variant of the first embodiment, in which a radial flange 15 is located between the screw head 3 and the flaps 4. The diameter d₁₅ of the radial flange 15 is equal to the diameter d₄ defined by the flaps 4. The radial flange 15 acts as a thrust device for pressing the material of the plate 16 removed by the flaps 4 in the direction of advance of the screw 20. Of course, although not represented, such a thrust device can also be added in any of the other embodiments described above.

Figure 16 shows a possible variant for the end of the screw 20 of the invention, which may be applied to any of the embodiments described above instead of the end 9 of pointed shape. In this variant, the end 9' of the shank 1 of the screw 20 opposite from the head 3 has a drill-like shape, which may be advantageous for the fixing of a plate on a profile of thickness higher than 0.8 mm.

As shown in all of the represented embodiments, the diameter defined by the points of the flaps that protrude the most is equal to or less than the head diameter. Preferably, according to the invention, the diameter defined by the points of the flaps that protrude the most is equal to the diameter of a frusto-conical portion of the screw head and is strictly greater than the diameter of the thread of the screw shank.

The details, shapes, dimensions and other accessory elements used to manufacture the screw of the invention may be suitably substituted with others which do not diverge from the scope defined by the claims included below.

## Claims

1. A screw (20) for fixing a plate (16) to a base (18), said screw comprising a shank (1) provided with a thread (13), that ends in a final attack portion (2) and on the opposite end of which there is a head (3), including flaps (4, 10, 11, 12) that protrude diametrically, **characterized in that** it has at least one pair of flaps (4, 10, 11, 12) located along a portion of the shank (1), without these flaps (4, 10, 11, 12) being present on the area corresponding to the final attack portion (2).

2. The screw according to claim 1, **characterized in that** the two flaps (4, 10, 11, 12) are located in diametrically opposed positions.

3. The screw according to either one of the preceding claims, **characterized in that** the two flaps (4, 10, 11, 12) are located on a point close to the screw head (3).

4. The screw according to any one of the preceding claims, **characterized in that** the flaps (4, 10, 11, 12) are located on a threaded area of the screw or on a prepared smooth area.

5. The screw according to any one of the preceding claims, **characterized in that** the flaps (4, 10, 11, 12) are axially aligned with respect to the longitudinal axis (X₁) of the shank (1).

6. The screw according to any one of claims 1 to 4, **characterized in that** the longitudinal axis of at least one of the flaps (4, 11, 12) has an angle of inclination (α) with respect to the longitudinal axis (X₁) of the shank (1).

7. The screw according to any one of the preceding claims, **characterized in that** the diameter (d₄, d₁₀, d₁₁, d₁₂) defined by the points of the flaps (4, 10, 11, 12) that protrude the most is equal to or less than the diameter of the screw head (3).

8. The screw according to any one of the preceding claims, **characterized in that** the screw head (3) has a generally frusto-conical portion (7) which flares from the shank (1), the diameter (d₄, d₁₀, d₁₁, d₁₂) defined by the points of the flaps (4, 10, 11, 12) that protrude the most being equal to or less than the maximum diameter (d₇) of the frusto-conical portion (7) of the screw head (3), preferably equal to the maximum diameter (d₇) of the frusto-conical portion (7) of the screw head (3).

9. The screw according to any one of the preceding claims, **characterized in that** the diameter (d₄, d₁₀, d₁₁, d₁₂) defined by the points of the flaps (4, 10, 11, 12) that protrude the most is strictly greater than the diameter (d₁₃) of the thread (13).

10. The screw according to any one of the preceding claims, **characterized in that** the head (3) is configured to be completely concealed in the material of the plate (16) in the fixed configuration.

11. The screw according to any one of the preceding claims, **characterized in that** the longitudinal dimension (ℓ₄, ℓ₁₀, ℓ₁₁, ℓ₁₂) of each flap (4, 10, 11, 12), parallel to the longitudinal axis (X₁) of the shank (1), is greater than or equal to the pitch (p₁₃) of the thread (13), preferably of the order of twice the pitch (p₁₃) of the thread (13).

12. The screw according to any one of the preceding claims, **characterized in that** the head (3) has a flat end portion (8) configured to be set back from, or flush with, a main surface (16A) of the plate (16) in the fixed configuration.

13. The screw according to claim 12, **characterized in that** the flat portion (8) has, on its periphery, cutting means (6) directed towards the shank (1) of the screw.

14. The screw according to any one of the preceding claims, **characterized in that**, for at least one flap (4, 11, 12), the mean plane (P) of the flap is inclined (α), relative to the longitudinal axis (X₁) of the shank (1), so that the end (4B, 11 B, 12B) of the flap furthest from the head (3) is circumferentially in front of the rest of the flap in the screwing direction of the screw.

15. The screw according to any one of the preceding claims, **characterized in that** at least one flap (12) has a curved shape with respect to the mean plane (P) of the flap, so as to form a concavity (12C) directed towards the forward in the screwing direction of the screw.

16. The screw according to any one of the preceding claims, **characterized in that** the end (12B) of at least one flap (12) furthest from the head (3) has a beveled edge (12D).

17. The screw according to any one of the preceding claims, **characterized in that** it comprises a thrust device (15) for pressing the material of the plate (16) removed by the flaps (4, 10, 11, 12) in the direction of advance of the screw, said thrust device (15) being positioned between the head (3) and the flaps.

18. The screw according to any one of the preceding claims, **characterized in that** the distance (e) between the end (8A) of the head (3) opposite from the shank (1) and the end (4B, 10B, 11B, 12B) of the flaps furthest from the head (3) is less than or equal to the thickness (e₁₆) of the portion of the plate (16) intended to be fixed on the base (18) by means of the screw.

19. Use of a screw according to any one of the preceding claims for fixing a plaster-based plate (16) on a base (18), such as a profile made of metal or wood.

20. A method for fixing a plate (16) to a base (18) by means of a screw according to any one of claims 1 to 18, comprising screwing the screw in the material of the plate (16) and the material of the base (18) until the head (3) of the screw is concealed in the material of the plate (16).
